# EUROPÄISCHE PATENTANMELDUNG

(11) **EP 1 457 320 A1**
(43) Veröffentlichungstag der Anmeldung: **15.09.2004**
(21) Anmeldenummer: 03405179.7
(22) Anmeldetag: 14.03.2003
(51) Int. Cl.: B32B 31/00, B42D 15/10

(54) **Kartenförmiger Datenträger, Verfahren zur Herstellung eines solchen Datenträgers sowie Laminiereinrichtung zur Herstellung eines kartenförmigen Datenträgers**

(71) Anmelder: Trüb AG, CH-5001 Aarau (CH)
(72) Erfinder: Siegfried, Christof, 5722 Gränichen (CH); Christen, Paul, 5000 Aarau (CH)
(74) Vertreter: Groner, Manfred

(57) **Zusammenfassung**

Der kartenförmige Datenträger (1, 1') weist ein Substrat (S) mit einer oberen und einer unteren Fläche (10, 11) sowie einen umlaufenden Rand (10a) auf. Eine transparente Schutzschicht (6) und eine Sicherheitsfolie (5) sind auf die obere Fläche (10) des Substrates (S) aufgebracht. Die Sicherheitsfolie (5) ist innerhalb der oberen Fläche (10) des Substrates (S) positioniert und die transparente Schutzschicht (6) überragt rundherum die Sicherheitsfolie (5). Wenigstens in einem Randbereich (6a, 6a') ist die Schutzschicht (6) flächig und direkt mit dem Substrat (S) verbunden. Der Datenträger (1, 1') ist insbesondere gegen Umwelteinflüsse widerstandsfähig und gegen Fälschungen sicher.

## Beschreibung

Die Erfindung betrifft einen kartenförmigen Datenträger mit einem Substrat, das eine obere Fläche mit einem Druck zur optischen Personalisierung und eine umlaufende Schmalseite aufweist, mit wenigstens einer transparenten Schutzschicht und einer unter dieser angeordneten Sicherheitsschicht, die ebenflächig auf die obere Fläche aufgebracht ist und den genannten Druck abgedeckt. Die Erfindung betrifft zudem ein Verfahren zur Herstellung eines solchen Datenträgers sowie eine Laminiereinrichtung.

Kartenförmige Datenträger der genannten Art sind insbesondere als Identitätskarten, als Ausweiskarten, Führerausweise und Sicherheitskarten allgemein bekannt. Zur Personalisierung solcher Karten sind Personalisierungssysteme entwickelt worden, bei denen ein Substrat, beispielsweise mittels Thermotransferdruck oder Thermosublimationsdruck personalisiert wird. Der Druck enthält insbesondere persönliche Angaben über den Träger, beispielsweise Namen, Geburtsdatum, eine Photographie sowie beispielsweise eine Ausweisnummer.

Bei solchen Datenträgern ist nun wesentlich, dass ein hoher Fälschungsschutz gewährleistet ist und die Personalisierung nicht geändert werden kann. Wesentlich ist zudem die Dauerhaftigkeit des Datenträgers, insbesondere gegen Abnutzung und Umwelteinflüsse. Solche Datenträger sollten auch bei starker Beanspruchung über mehrere Jahre benutzbar sein und der genannte Fälschungsschutz sollte während dieser Zeit aufrecht erhalten bleiben. Als Schutz gegen Fälschung wird der personalisierte Bereich bzw. Druck mit einer Sicherheitsfolie, beispielsweise einer handelsüblichen TKO-Folie abgedeckt und auf diese wird dann noch eine ebenfalls transparente Schutzfolie aufgetragen. Die Sicherheitsfolie ist sehr dünn und mit Sicherheitselementen, beispielsweise Hologrammen versehen, und kann nicht unbemerkt vom Substrat abgelöst werden. Ein besonderes Problem bei solchen Datenträgern sind die Umwelteinflüsse und insbesondere die Einwirkung von Feuchtigkeit auf den Datenträger. Insbesondere einwirkende Feuchtigkeit kann dazu führen, dass der Schutz der Personalisierung nicht mehr vollumfänglich gewährleistet ist. Es hat sich auch gezeigt, dass sich die Schutzfolie ablösen kann und der Schutz der Personalisierung dann nicht mehr gewährleistet ist.

Der Erfindung liegt die Aufgabe zugrunde, einen kartenförmigen Datenträger der genannten Art zu schaffen, der gegen Fälschung und Abnutzung, insbesondere mechanische, chemische und thermische Abnutzung und Alterung noch wirksamer geschützt ist.

Die Aufgabe ist bei einem kartenförmigen Datenträger dadurch gelöst, dass die genannten Mittel zur Personalisierung innerhalb eines freien Randes der oberen Fläche des Substrates auf dieser angeordnet sind und die transparente Sicherheitsfolie diese Mittel innerhalb des freien Randes abdeckt und die transparente Schutzfolie im Bereich des freien Randes direkt mit dem Substrat verbunden ist. Die Schutzschicht ist somit im Bereich eines umlaufenden Randes direkt mit dem Substrat verbunden. Versuche haben gezeigt, dass durch diese direkte Verbindung der transparenten Schutzfolie mit dem Substrat ein Ablösen der Schutzschicht vom Datenträger in Folge von Umwelteinflüssen zuverlässiger als bisher vermieden werden kann. Feuchtigkeit kann am Rand des Datenträgers nicht mehr zwischen die Schichten eindringen und die Sicherheitsfolie aufspalten und ablösen. Damit ist auch sichergestellt, dass die Sicherheitsschicht bei einem Fälschungsversuch vom Substrat nicht abgelöst werden kann. Einerseits ist damit die Personalisierung gegen Fälschung besser gesichert und andererseits ist der Datenträger gegen eine Beschädigung besser geschützt. Es können auch mehrschichtige Sicherheitsfolien verwendet werde, die ansonst bei eindringender Feuchtigkeit aufgespalten würden.

Eine noch grössere Sicherheit gegen Fälschung ergibt sich dann, wenn gemäss einer Weiterbildung der Erfindung die Sicherheitsfolie aus mehreren Teilen besteht, die im Abstand zueinander auf dem Substrat befestigt sind, sodass die transparente Schutzfolie auch zwischen diesen Teilen flächig mit dem Substrat verbunden ist. Damit ist auch die Dauerhaftigkeit erhöht, da die Datenträgerschicht sich im mittleren Bereich des Datenträgers nicht vom Substrat lösen kann. Der Druck besteht hierbei vorzugsweise ebenfalls aus mehreren Bereichen, die jeweils vollständig von einem Teil der Sicherheitsfolie abgedeckt ist.

Der Randbereich, in dem die transparente Schutzschicht direkt mit dem Substrat verbunden ist, ist vorzugsweise wenige Millimeter, vorzugsweise höchstens etwa 10 mm breit. Damit steht für die Daten zur Personalisierung des Datenträgers eine noch hinreichend grosse Fläche zur Verfügung.

Bei einem besonders geeigneten Verfahren zur Herstellung des kartenförmigen Datenträgers wird die Sicherheitsfolie mittels einer Rolle auf das Substrat aufgebracht. Eine besonders präzise Positionierung der Sicherheitsfolie auf dem Substrat ist dann gewährleistet, wenn die Rolle die Sicherheitsfolie nach einem Stempelprinzip auf das Substrat aufbringt bzw. auflaminiert. Die Sicherheitsfolie (Sicherheitsschicht) wird hierbei von einer Trägerfolie abgelöst.

Eine besonders geeignete Laminiereinrichtung weist eine Heizrolle auf, die direkt angetrieben ist. Die Heizrolle ist am Umfang vorzugsweise entsprechend der zu übertragenden Sicherheitsfolie abgestochen, sodass die Sicherheitsfolie nach dem Stempelprinzip von der Trägerfolie abgelöst und auf das Substrat übertragen wird. Der Antrieb der Heizrolle ist hierbei genau mit der Bewegung bzw. Geschwindigkeit der herzustellenden Karte synchronisiert.

Nach einer Weiterbildung der Erfindung stellt eine Registrierung der Heizrolle sicher, dass die Positionierung der aufzutragenden Sicherheitsfolie auf der Oberseite des Substrates bei allen Datenträgern gleich ist. Vorzugsweise wird hierzu die Heizrolle nach jedem Auftrag in eine Null-Position gebracht.

Ein Ausführungsbeispiel der Erfindung wird nachfolgend anhand der Zeichnung näher erläutert. Es zeigen:
- Figur 1: schematisch eine Draufsicht auf einen erfindungsgemässen Datenträger,
- Figur 2: eine Seitenansicht des Datenträgers gemäss Figur 1,
- Figur 3: schematisch eine Draufsicht auf einen Datenträger nach einer Variante,
- Figur 4: schematisch die Positionierung einer Datenträgerschicht auf dem Substrat,
- Figur 5: schematisch das Aufbringen der Deckfolie,
- Figur 6: schematisch eine Seitenansicht des Datenträgers gemäss Figur 3, wobei die Schichten zur Illustration des Aufbaus von einander getrennt sind,
- Figur 7: schematisch ein Schnitt entlang der Linie VII-VII der Figur 3,
- Figur 8: schematisch eine Ansicht einer erfindungsgemässen Laminiereinrichtung, wobei Teile aus technischen Gründen weggebrochen sind,
- Figur 9: schematisch ein Schnitt durch eine Heizrolle.
- Figur 10: schematisch eine Teilansicht der Laminiereinrichtung und
- Figur 11: schematisch das Auflaminieren der Sicherheitsfolie.

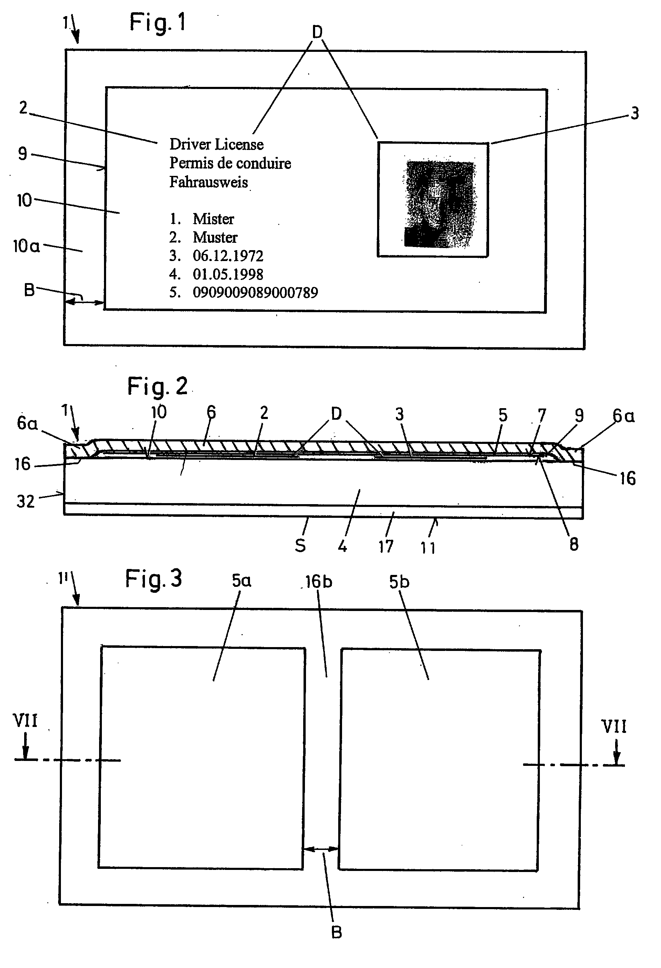

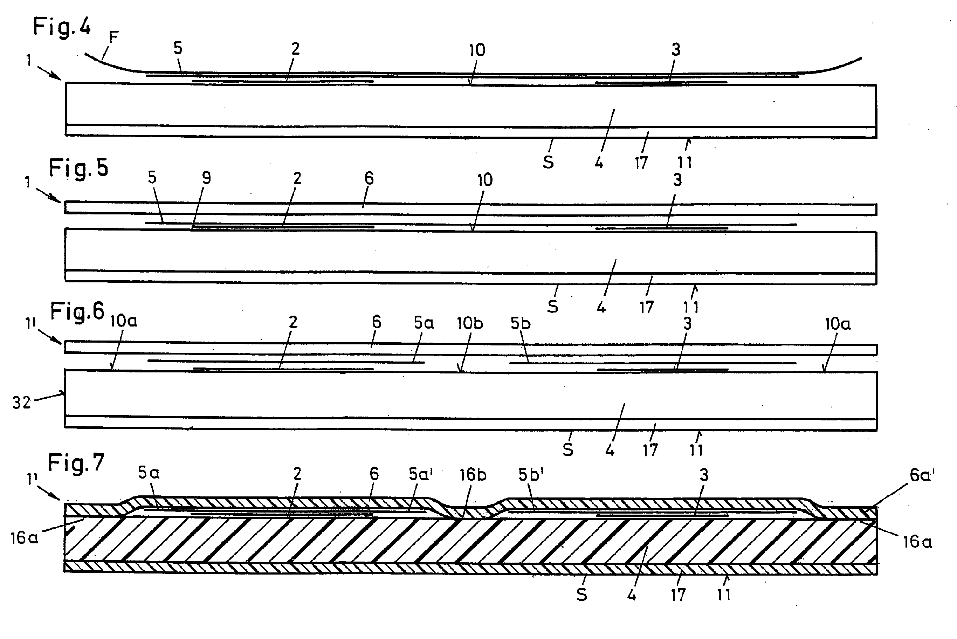

Die Figuren 1 und 2 zeigen einen Datenträger 1, der als mehrschichtige, rechteckige und flexible Karte ausgebildet ist. Ein Substrat S besteht vorzugsweise aus mehreren Schichten 4. Eine unterste Schicht 17 wird durch eine transparente Schutzfolie gebildet. Auf eine obere Fläche 10 (Figur 4) des Substrates 5 ist ein Druck D aufgebracht. Dieser Druck D wird beispielsweise durch Thermosublimation oder Thermotransferdruck auf das Substrat S aufgebracht und besteht insbesondere aus Daten 2 und einer bildlichen Darstellung 3. Der Druck D weist beispielsweise eine Dicke von etwa 2 µm bis 5 µm auf. Grundsätzlich ist eine optische Personalisierung auch mit anderen Mitteln als einem Druck denkbar.

Der Druck D ist innerhalb der Fläche 10 positioniert und lässt gemäss Figur 1 einen umlaufenden Rand 10a frei. Die Breite B dieses Randes 10a beträgt maximal etwa zehn mm und vorzugsweise drei bis acht mm.

Zur Sicherung des Druckes D (Personalisierung) gegen Fälschung ist dieser mit einer transparenten Sicherheitsfolie 5 abgedeckt, die mehrschichtig sein kann. Die Sicherheitsfolie 5 ist insbesondere eine sogenannte TKO-Folie, die maschinell aufgetragen und mit dem Druck D bzw. dem Substrat S verbunden wird. Diese sehr dünne Sicherheitsfolie 5 ist gleich oder ähnlich gross wie die Fläche des Drucks (der Personalisierung) und lässt ebenfalls den Rand 10a frei. Die Sicherheitsfolie 5 ist von einer transparenten Schutzschicht 6 abgedeckt, die wesentlich dicker ist als die Sicherheitsfolie 5 und die sich annähernd bis zur Schmalseite 32 des Substrats S erstreckt. Vorzugsweise wird diese Schutzschicht 6 mit etwa 1 bis 1,5 mm Abstand zum Rand appliziert. Es ist aber auch denkbar, dass dieser Rand noch schmäler ist oder ganz wegfällt.

Die transparente Schutzschicht 6 überragt die Sicherheitsfolie 5 rundum mit einem Randbereich 6a, der direkt mit der Substratschicht 4 verbunden ist. Zwischen der transparenten Schutzschicht 6 und dem Substrat S besteht somit eine umlaufende flächige Verbindung 16, die durch einen Laminierprozess hergestellt wird. Die Verbindung 16 ist vorzugsweise eine Klebeverbindung. Beim Laminierverfahren wird ein geeigneter Klebstoff an der Unterseite der Schutzschicht 6 durch Wärme aktiviert. Die Sicherheitsfolie 5 ist an ihrer Unterseite 8 und an ihrer Oberseite 7 flächig mit dem Substrat S bzw. der transparenten Schutzschicht 6 verbunden. Diese flächigen Verbindungen werden ebenfalls beim Laminieren durch Aktivieren eines Klebstoffes hergestellt.

Die Sicherheitsfolie 5 besitzt eine umlaufende Kante 9, die im Abstand zur Schmalseite 32 des Datenträgers 1 angeordnet ist. Die Sicherheitsfolie 5 befindet sich somit innerhalb der oberen Fläche 10 des Substrats S. Da die Verbindung 16 gegen Umwelteinflüsse und insbesondere Feuchtigkeit weitgehend inert ist, ist ein Eindringen von Feuchtigkeit in den Bereich des Druckes 5 und der Sicherheitsfolie wirksam vermieden. Die Sicherheitsfolie 5 kann sich auch bei langzeitiger Einwirkung von Feuchtigkeit nicht vom Substrat S und vom Druck D lösen. Die dauerhafte Verbindung 16 erschwert zudem bei einem Fälschungsversuch ein Ablösen der Schutzschicht 6.

Bei der Ausführung gemäss Figur 3 besteht die Sicherheitsfolie 5 aus zwei Teilen 5a und 5b, die im Abstand zueinander auf der Substratschicht 4 positioniert sind. Zwischen den Teilen 5a und 5b besteht ein streifenförmiger Bereich 16b, in dem die Sicherheitsfolie 5 direkt mit dem Substrat S verbunden ist. Beide Teile 5a und 5b sind somit von derselben Schutzschicht 6 überdeckt und werden jeweils rundum von dieser überragt. Die Schutzschicht 6 ist damit auch im mittleren Bereich 16b des Datenträgers 1' direkt mit der Substratschicht 4 verbunden, was ein Ablösen der Datenträgerschicht 5 im mittleren Bereich 16b des Datenträgers 1' besonders wirksam verhindert. Die Breite B des Bereichs 16b beträgt vorzugsweise ebenfalls wenige Millimeter, vorzugsweise weniger als 8 mm. Denkbar ist auch eine Ausführung, bei welcher die Sicherheitsfolie 5 aus mehr als zwei im Abstand zueinander angeordneten Teilen besteht.

Bei der Herstellung des Datenträgers 1 wird das Substrat S personalisiert, indem die Daten 2 und die bildliche Darstellung 3 auf die obere Fläche 10 aufgedruckt werden. Das Drucken erfolgt insbesondere durch Thermotransferdruck oder Thermosublimationsdruck. Grundsätzlich sind aber auch andere Drucktechniken, beispielsweise Laserdruck oder andere Verfahren zum Aufbringen von visuell sichtbaren Informationen denkbar.

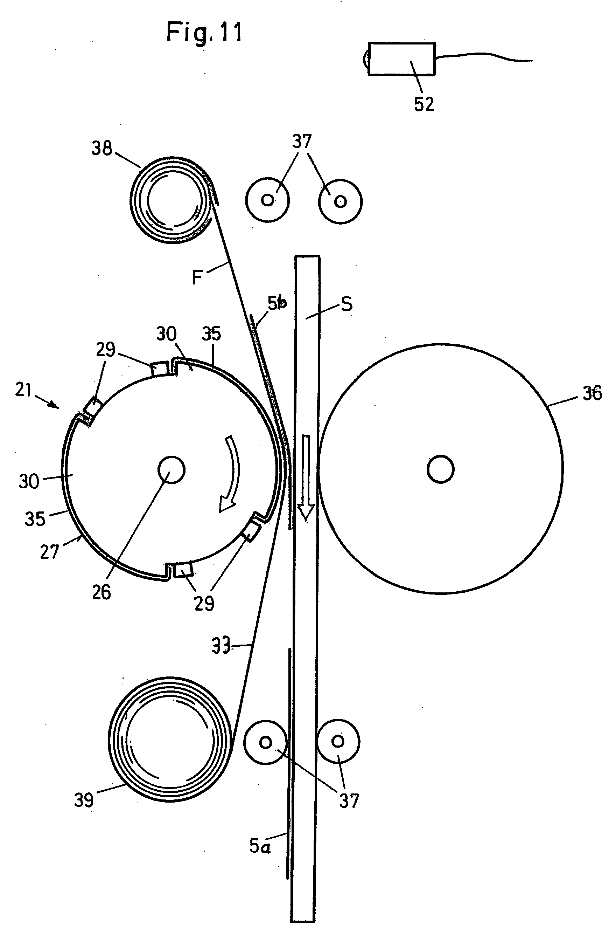

Nach dem Bedrucken des Substrats S wird ein Folienstreifen F gemäss Figur 4 auf der oberen Fläche 10 des Substrates S genau positioniert und mit einer Heizwalze 21 gemäss Figur 11 nach dem Stempelprinzip auf die obere Fläche 10 aufgebracht. Die Sicherheitsfolie 5 wird hierbei von einer Trägerfolie des Folienstreifens F abgelöst und auf das Substrat 4 übertragen.

Nach dem Auftragen der Sicherheitsfolie 5 wird die transparente Schutzschicht 6 auflaminiert. Auf der Oberseite der Schutzschicht 6 kann sich am Rand 6a eine Stufe bilden, wie dies beispielsweise die Figur 2 zeigt.

Die Figur 5 zeigt das Substrat S mit der aufgebrachten Sicherheitsfolie 5. Wie ersichtlich, ist der Rand 9 bezüglich der Schmalseite 32 nach innen versetzt. Wird nun die transparente Schutzschicht 6 auflaminiert, so wird diese ausserhalb des Randes 9 im Bereich 10a direkt mit dem Substrat S verbunden.

Bei der Herstellung des Datenträgers 1' werden gemäss Figur 6 über dem Substrat S zwei entsprechende und von einander getrennte Sicherheitsfolien 5a' und 5b' auflaminiert. Beim Auflaminieren der transparenten Schutzschicht 6 verbindet sich diese in einem umlaufenden Randbereich 10a und in einem Zwischenbereich 10b mit dem Substrat S. Die Figur 7 zeigt den fertigen Datenträger 1' und wie ersichtlich besteht zwischen der transparenten Schutzschicht 6 und dem Substrat S eine äussere umlaufende Verbindung 16a sowie eine Verbindung 16b in einem mittleren Bereich. Diese Verbindungsbereiche 16a und 16b sind gemäss Figur 3 in der Form einer Acht miteinander verbunden. Die beiden Sicherheitsfolien 5a' und 5b' sind damit jeweils von einem festen Verbindungsbereich 16a bzw. 16b umschlossen und damit gegen eindringende Feuchtigkeit und gegen Fälschen geschützt. Der mittlere Bereich 16b stabilisiert zudem den Datenträger 1', da in diesem Bereich gemäss Figur 3 die transparente Schutzschicht 6 besonders fest mit dem Substrat S verbunden ist. Der Datenträger 1' ist damit auch bei starker Beanspruchung besonders dauerhaft.

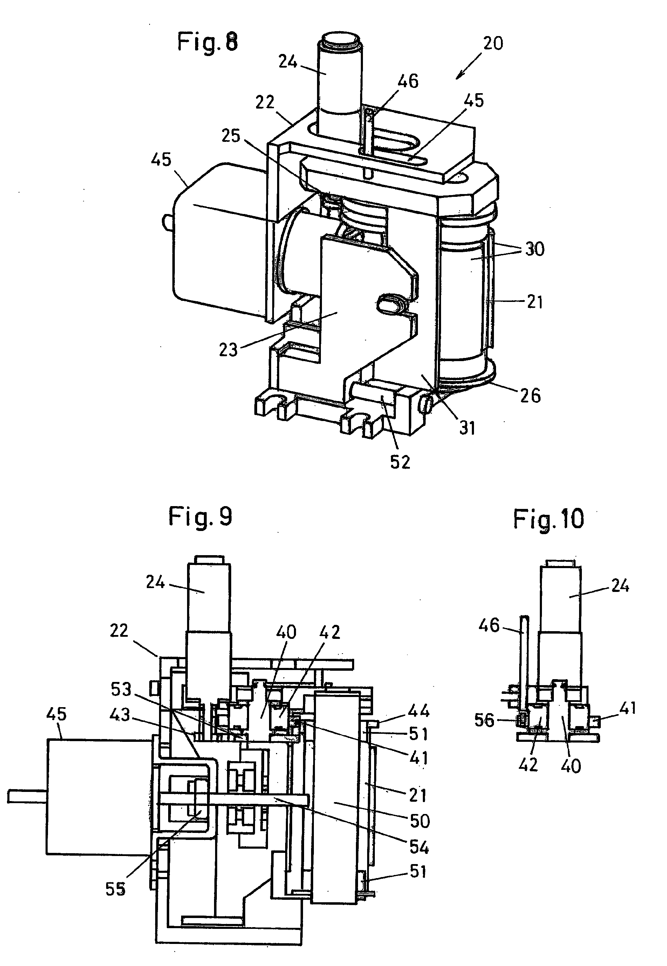

Zum Aufbringen der Sicherheitsfolie 5 ist die in den Figuren 8, 9 und 10 gezeigte Laminiereinrichtung 20 vorgesehen. Diese weist ein Maschinengestell 22 auf, an dem auf Führungsstangen 52 ein Träger 23 verschiebbar gelagert ist.

Zwischen Seitenplatten 31, die mit dem Träger 23 verbunden sind, ist am Träger 23 eine Heizwalze 21 gelagert, die von einem Servomotor 24 über ein Getriebe 25 angetrieben ist. Beim Verschieben des Träger 23 werden gleichzeitig die Heizwalze 21, das Getriebe 25 und der Servomotor 24 verschoben. Ebenfalls wird gleichzeitig ein Initiator 46 verschoben. Damit eine solche Verschiebung möglich ist, sind im Maschinengestell 22 entsprechende Langlöcher 45 eingearbeitet. In der Figur 9 ist die Heizwalze 21 somit in der Zeichnungsebene horizontal verschiebbar.

Das Getriebe 25 weist gemäss Figur 9 eine am Träger 23 gelagerte Stufenwelle 40 auf, die über einen Freilauf 42 mit einem Zahnrad 41 verbunden ist. Ein fest mit der Stufenwelle 40 verbundenes Zahnrad 53 kämmt mit einem Zahnrad 43, das auf der Motorenwelle des Servoantriebs 24 befestigt ist. Zum Antrieb der Heizwalze 21 kämmt das Zahnrad 41 mit einem an der Heizwalze 21 befestigtem Zahnrad 44. Die Heizwalze 21 ist mit zwei Kohlelager 51 auf einer an sich bekannten Heizpatrone 50 rotierbar gelagert. Die Heizpatrone 50 ist auf einer Scheibe 26 abgestützt.

Der Antrieb der Heizwalze 21 erfolgt somit durch den Servomotor 24 über die Zahnräder 43 und 53, die Stufenwelle 40, den Freilauf 42 und die Zahnräder 41 und 44. Auf dem Zahnrad 41 sitzt gemäss Figur 10 ein Zylinderstift 56, auf welchen der Initiator 46 anspricht. Der Initiator 46 ist insbesondere als induktiver Näherungssensor ausgebildet. Dieser reagiert auf den Zylinderstift 56. Sobald sich der Initiator 46 auf dem Zylinderstift 56 befindet, wird der Servomotor 24 ausgeschaltet. Dieser ist dann in Warteposition. Fährt ein Substrat 5 über den in Figur 11 angedeuteten Sensor 52, so dreht der Servomotor 24 bis zu einer Anfangsposition, welche die Startposition ist. Nun ist die Heizwalze 21 für den Auftrag wenigstens einer Sicherheitsfolie 5 auf das Substrat S bereit.

Die oben erwähnten Verschiebungen des Träger 22 und damit der Heizwalze 21 erfolgt mit einem Vorschubmotor 45, der eine Gewindestange 54 besitzt, die über eine Mutter 55 mit dem Träger 23 verbunden ist. Durch Drehen der Gewindestange 54 wird der Träger 23 gegen die in Figur 11 gezeigte Gegendruckwalze 36 oder von dieser weg bewegt.

Wie die Figur 11 schematisch zeigt, weist die Heizwalze 21 wenigstens zwei Segmente 30 auf, die jeweils eine flexible Beschichtung 35, beispielsweise aus Gummi, aufweisen und die mittels einer Aussenfläche 27 jeweils in einem streifenförmigen Bereich den Folienstreifen F erwärmen und an einem Substrat S anpressen und damit eine Sicherheitsfolie 5 auf das Substrat S aufbringen. Die flexiblen Schichten 35 sind an einem seitlich überragenden Stützteil 29 angebracht. Die Übertragung der Sicherheitsfolie 5 ist aber auch mit einer Metallwalze ohne flexible Beschichtung möglich. Die Heizwalze 21 dreht hierbei synchron mit dem tangential vorbeilaufenden und an Transportrollen 37 geführten Substrat S. Der Folienstreifen F läuft mit gleicher Geschwindigkeit mit dem Substrat S mit, das an einer Gegendruckwalze 36 abgestützt ist. Der Folienstreifen F wird von einer Rolle 38 abgezogen und auf eine Rolle 39 aufgerollt. Ist die Sicherheitsfolie 5 auf das Substrat S aufgebracht, so wird diese zusammen mit dem Substrat S vom Träger 33 abgezogen. In der Ausführung gemäss Figur 11 werden auf das Substrat S zwei Sicherheitsfolien 5a und 5b aufgetragen. Der Abstand B (Fig. 3) entspricht dem Abstand zwischen benachbarten Segmenten der Heizwalze 21.

Das Substrat S wird wie oben erläutert personalisiert und kommt zum Auftragen der Sicherheitsfolie 5a, 5b in die Laminierungseinrichtung 20. Sobald der Sensor 52 (Figur 11) meldet, dass ein Substrat S eintrifft, wird die Heizwalze 21 wie oben erwähnt vom Servomotor 24 in eine Startposition gedreht. Ist das Substrat S auf der Höhe der beheizten Heizwalze 21, so wird die Heizwalze 21 mit dem Vorschubmotor 45 zum Substrat S bewegt. Durch den Druck der Gegendruckrolle 36 wird das Substrat S mitgenommen. Der Freilauf 42, 16 verhindert, dass der Servomotor 24 hierbei in Bewegung kommt. Kurze Zeit später schaltet der Servomotor 24 ein und nimmt die gleiche Geschwindigkeit wie das Substrat S an. Dies wird erreicht, bevor die beheizte Heizwalze 21 eine erste Freistellung in axialer Richtung erreicht. Bei der Freistellung der Heizwalze 21 hat diese mit dem Substrat S keine Berührung mehr, und damit ist der Antrieb unterbrochen. Der Servomotor 24 gewährleistet in dieser Stellung den weiteren Antrieb der Heizwalze 21. Die Heizwalze 21 hat dabei immer noch die gleiche Geschwindigkeit wie das Substrat S, somit gibt es immer die gleiche Spaltenbreite. Nach der Freistellung in der Heizwalze 21 hat diese wieder Berührung zum Substrat S. Ist die zweite Freistellung erreicht, so fährt die Heizwalze 21 wieder zurück. Das Substrat S mit den auflaminierten Sicherheitsfolien 5a und 5b wird dann zu einer weiteren Station geführt und die Laminiereinrichtung 20 ist für ein weiteres Substrat bereit.

Der direkte Antrieb der Heizwalze 21 durch den Servomotor 24 hat den Vorteil, dass die Heizwalze 21 bei fehlendem Kontakt mit dem Substrat S nicht stehen bleibt. Der Antrieb der Heizwalze 21 kann dadurch mit der Bewegung bzw. der Geschwindigkeit des zu verarbeitenden Substrates S synchronisiert.

Eine Registrierung der Heizwalze 21 in einer hier nicht gezeigten Steuerung stellt sicher, dass die Positionierung der zu übertragenden Sicherheitsfolie 5 bzw. die Ssicehrheitsfolien 5a und 5b auf die Oberfläche des Substrates S bei jedem Datenträger 1 gleich ist. Nach jedem Auftragen einer Sicherheitsfolie 5 wird die Heizrolle 21 in die Null-Position gebracht. Die Heizwalze 21 kann ausgewechselt und beispielsweise durch eine mit mehr oder weniger als zwei Segmenten ersetzt werden.

## Patentansprüche

1. Kartenförmiger Datenträger (1, 1' ) mit einem Substrat (S), das eine obere Fläche (10) mit Mitteln (D) zur optischen Personalisierung sowie eine umlaufende Schmalseite (32) aufweist, mit wenigstens einer transparenten Schutzschicht (6) und einer unter dieser angeordneten transparenten Sicherheitsfolie (5, 5a, 5b), die ebenflächig auf die obere Fläche (10) des Substrates (S) aufgebracht ist und die genannten Mittel (D) abgedeckt, **dadurch gekennzeichnet, dass** die genannten Mittel (D) innerhalb eines freien Randes (10a) der oberen Fläche (10) des Substrates (S) angeordnet sind und die transparente Sicherheitsfolie (5, 5a, 5b) dieses Mittel (D) innerhalb des freien Randes (10a) abdeckt und die transparente Schutzfolie (5, 5a, 5b) im Bereich des freien Randes (10a) direkt mit dem Substrat (S) verbunden ist.

2. Datenträger nach Anspruch 1, **dadurch gekennzeichnet, dass** die Sicherheitsfolie (5, 5a, 5b) aus mehreren Teilen (5a, 5b) besteht, die im Abstand zueinander auf dem Substrat (4) befestigt sind und dass die transparente Schutzschicht (6) auch zwischen diesen Teilen (5a, 5b) in einem Bereich (16b) flächig mit dem Substrat (4) verbunden ist.

3. Datenträger nach Anspruch 2, **dadurch gekennzeichnet, dass** die Sicherheitsfolie (5) aus zwei Teilen (5a, 5b) besteht, zwischen denen ein streifenförmiger Bereich (16b) besteht, in dem die transparente Schutzschicht (6) direkt mit dem Substrat (S) verbunden ist.

4. Datenträger nach einem der Ansprüche 1 bis 3, **dadurch gekennzeichnet, dass** die transparente Schutzschicht (6) das Substrat (S) vollflächig und bündig oder mit einem Abstand von 1 bis 1,5 mm zur Schmalseite (32) überdeckt.

5. Datenträger nach einem der Ansprüche 1 bis 4, **dadurch gekennzeichnet, dass** die genannten Mittel (D) zur Personalisierung einen Druck (D), insbesondere einen Thermotransferdruck oder Thermosublimationsdruck aufweisen.

6. Datenträger nach einem der Ansprüche 1 bis 5, **dadurch gekennzeichnet, dass** der Rand (6a, 6a'), mit dem die transparente Schutzschicht (6) die Sicherheitsfolie (5) überragt, eine Breite (B) aufweist, die kleiner als 10 mm, vorzugsweise kleiner als 8 mm ist.

7. Datenträger nach Anspruch 6, **dadurch gekennzeichnet, dass** die Breite (B) des Bereiches (6a, 6a') 4 bis 6 mm beträgt.

8. Verfahren zur Herstellung eines kartenförmigen Datenträgers, wobei eine obere Fläche (10) eines Substrats (S) personalisiert und der personalisierte Bereich (D) mit einer Sicherheitsfolie (5, 5a, 5b) abgedeckt und diese Sicherheitsfolie wiederum mit einer transparenten Schutzschicht (6) abgedeckt wird, **dadurch gekennzeichnet, dass** ein freier Rand (10a) der genannten oberen Fläche (10) im Wesentlichen nicht personalisiert und insbesondere nicht bedruckt wird, und dass die Sicherheitsfolie (5, 5a, 5b) so aufgetragen wird, dass sie innerhalb der oberen Fläche (10) des Substrates (S) im Abstand zu einer Schmalseite (32) des Substrates (S) angeordnet ist und den genannten freien Rand (10a) frei lässt und die Schutzschicht (6) im Bereich des freien Randes (10a) direkt mit dem Substrat (S) verbunden wird.

9. Verfahren nach Anspruch 7, **dadurch gekennzeichnet, dass** die Sicherheitsfolie (5, 5a, 5b) mittels einer Walze (21) nach dem Stempelprinzip auf das Substrat (S) auflaminiert wird.

10. Verfahren nach Anspruch 7 oder 8, **dadurch gekennzeichnet, dass** auf das Substrat (S) zwei oder mehr Sicherheitsfolien (5a, 5b) aufgebracht werden, wobei diese Folien (5a, 5b) bezüglich der oberen Fläche (10) des Substrates (S) positioniert werden, sodass zwischen diesen Sicherheitsfolien (5a, 5b) nach dem Auftrag jeweils ein freier Bereich (10b) besteht und die Schutzschicht (6) in diesem freien Bereich direkt mit dem Substrat (S) verbunden wird.

11. Verfahren nach einem der Ansprüche 8 bis 10, **dadurch gekennzeichnet, dass** das Substrat (S) zum Auflaminieren der Sicherheitsfolie (5, 5a, 5b) zwischen einer angetriebenen Walze (21) und einer Gegendruckwalze (36) geführt wird.

12. Verfahren nach einem der Ansprüche 9 bis 11, **dadurch gekennzeichnet, dass** die Walze (21) beheizt ist und die Sicherheitsfolie (5, 5a, 5b) mit erhöhter Temperatur mit dem Substrat (S) verbunden wird.

13. Laminiereinrichtung zur Herstellung von kartenförmigen Datenträgern mit einer Heizwalze (21) und einer Gegenwalze (36), zwischen denen ein Folienstreifen (F) und Substrate (S) hindurchzufördern sind, wobei das Substrat (S) auf der bedruckten Seite mit einer vom Folienstreifen (F) abzulösenden Sicherheitsfolie (5, 5a, 5b) laminiert wird, mit Transportmittel für den Folienstreifen (F) und die Substrate (S), **dadurch gekennzeichnet, dass** die Heizwalze (21) angetrieben ist.

14. Laminiereinrichtung nach Anspruch 13, **dadurch gekennzeichnet, dass** die Heizwalze (21) an ihrem Umfang wenigstens ein Segment aufweist.
